# EUROPEAN PATENT APPLICATION

(11) **EP 4 567 625 A1**
(43) Date of publication of application: **11.06.2025**
(21) Application number: 23214442.8
(22) Date of filing: 05.12.2023
(51) Int. Cl.: G06F 16/25, G06N 3/084

(54) **DATA MATCHING SYSTEM**

(71) Applicant: Mastercard International Incorporated, Purchase NY 10577 (US)
(72) Inventor: Tran, Ngoc Minh, Dublin, D15XRN0 (IE); Conway, James, Dublin, D12 CH63 (IE); Flinter, Stephen Patrick, Dublin, D6WDR68 (IE)
(74) Representative: Barker Brettell LLP

(57) **Abstract**

The present invention relates to a computer implemented method for enabling data matching at a data acquirer in the event of a failure at a data supplier. The method comprises obtaining acquirer matching data, an acquirer matching algorithm, supplier matching data and a supplier matching algorithm, performing a first matching process using the acquirer matching algorithm, wherein the first matching process comprises comparing the acquirer matching data to the supplier matching data such that a first subset of the acquirer matching data and a first subset of the supplier matching data that comprise corresponding data points to each other are determined using the acquirer matching algorithm and performing a second matching process using the supplier matching algorithm, wherein the second matching process comprises comparing the acquirer matching data to the supplier matching data using the supplier matching algorithm, such that a second subset of the acquirer matching data and a second subset of the supplier matching data that comprise corresponding data points to each other are determined using the supplier matching algorithm. A difference between one of the subsets determined by the first matching process and one of the subsets determined by the second matching process is then determined and the acquirer matching algorithm is updated based on the difference, thereby to converge the acquirer matching algorithm towards the supplier matching algorithm.

## Description

### Field

The present invention relates to methods and systems for enabling data matching at a data acquirer in the event of a failure at a data supplier. In particular, the method and systems allow for a data acquirer to train a data matching algorithm based on the matching algorithms of a data supplier or group of data suppliers, and the application of the data matching algorithm into real world systems.

### Background

When training and testing artificial intelligence (AI) models, significant amounts of data is required, for example to improve predictions of the model. In some instances, this data may be obtained from a data supplier. However, the data supplier may have large amounts of data that is not relevant to the AI project or model, or that is not necessary to the data acquirer's activities. In order to determine the data that is required by the data acquirer, the data supplier may determine which of their own data matches the data which the acquirer wishes to obtain. Usually, this is achieved by the data acquirer sending a set of data to the data supplier, in which the data supplier matches this data to their own data using a matching algorithm. This determines the relevant data points to return back to the data acquirer. In this way, the data acquirer has acquired only data that is relevant.

However, there are issues that may arise with the current approach. Each of the data suppliers may have different matching algorithms to each other that work in different ways, and therefore have varying levels of accuracy. The matching algorithms may differ as they have been designed by different entities and for different uses, such as different data formats. Data suppliers also may be reluctant to share their exact matching algorithms or provide detailed knowledge on how these algorithms work, and therefore the data acquirer must rely on the systems and matching algorithms of the data suppliers to which they do not have access.

Another problem that may arise during this process, is if a data supplier system or matching algorithm were to fail. This failure may be a network security threat at the data supplier, or a failure of the data supplier's computer systems caused by malicious software. Such a failure has an effect on the systems and algorithms at the data acquirer, as data can no longer be acquired or matched. The failure may also be that the data supplier has modified or altered their matching algorithm such that it is no longer compatible with the data of the data acquirer. Therefore, the supplier can no longer match their data to the acquirer's data, or the accuracy of the matching is significantly reduced, meaning the data acquirer can no longer acquire any data.

Furthermore, a failure at one or more of the data suppliers may have a knock-on effect at any other data supplier the acquirer may use. Usually, once a data acquirer has acquired a set of data from one supplier, when acquiring data form the next supplier, they will send this set of data to that next supplier. If the matching algorithm of the first data supplier were to fail or decrease in performance due to an unforeseen event such as a network security threat, the acquirer would therefore have less data or no data at all to send to the next data supplier affecting the data matching at the next data supplier.

This may substantially reduce the efficiency of the process and decreases the amount of data that the acquirer can obtain from each of the data suppliers. A network security threat or fraudulent activity at one data supplier, may cause this knock-on effect and may threaten the activity of the data acquirer as well as the other data suppliers.

The present invention sets out to alleviate these problems relating to inefficiencies and failures.

### Summary of Invention

According to a first aspect of the invention there is provided a computer implemented method for enabling data matching at a data acquirer in the event of a failure at a data supplier, the method comprising: obtaining acquirer matching data and an acquirer matching algorithm; obtaining supplier matching data and a supplier matching algorithm; performing a first matching process using the acquirer matching algorithm, wherein the first matching process comprises comparing the acquirer matching data to the supplier matching data such that a first subset of the acquirer matching data and a first subset of the supplier matching data that comprise corresponding data points to each other are determined using the acquirer matching algorithm; performing a second matching process using the supplier matching algorithm, wherein the second matching process comprises comparing the acquirer matching data to the supplier matching data using the supplier matching algorithm, such that a second subset of the acquirer matching data and a second subset of the supplier matching data that comprise corresponding data points to each other are determined using the supplier matching algorithm; determining a difference between one of the subsets determined by the first matching process and one of the subsets determined by the second matching process; and updating the acquirer matching algorithm based on the difference, thereby to converge the acquirer matching algorithm towards the supplier matching algorithm.

In this way, an acquirer matching algorithm can be updated based on a matching algorithm of the data supplier. Therefore, the acquirer matching algorithm can be adapted to correspond to the matching algorithm of the supplier. The matching algorithm of the acquirer is converged towards the matching algorithm of the supplier, such that the difference determined between each of the matching process using the acquirer matching algorithm and the matching process using the supplier matching algorithm is minimized or reduced. If a failure at the supplier or if a failure of the supplier matching algorithm were to occur, this will no longer cause the acquirer the inability to obtain matched data, as the acquirer matching algorithm, that may be housed at the data acquirer, can perform the same function as the supplier matching algorithm. The matching processes can now be performed at the data acquirer without the data acquirer having to send their matching data and matching algorithm to the supplier. Furthermore, the data matching algorithm of the acquirer will be compatible with any data acquired from the supplier, as it has been developed using the algorithm of the supplier.

Preferably, determining a difference between one of the subsets determined by the first matching process and one of the subsets determined by the second matching process may comprise either: determining a difference between the first subset of acquirer matching data and the second subset of acquirer matching data; or determining a difference between the first subset of supplier matching data and the second subset of supplier matching data.

In this way, the difference determined is the difference between one of the first subsets of matching data and the associated second subset of matching data. The associated second subset of matching data is the second subset of matching data that is related to the same entity as one of the first subsets of matching data, i.e., whether it is a subset of acquirer matching data or supplier matching data. Therefore, the associated second subset of matching data to the first subset of acquirer matching data is the second subset of acquirer matching data, and the associated second subset of matching data to the first subset of supplier matching data is the second subset of supplier matching data.

Alternatively the difference may be determined between the first subset of acquirer matching data and the second subset of supplier matching data, or between the first subset of supplier matching data and the second subset of acquirer matching data.

Preferably, the acquirer matching data and acquirer matching algorithm may be obtained from the data acquirer and/or the supplier matching data and supplier matching algorithm are obtained from the data supplier.

The acquirer matching data and acquirer matching algorithm are associated with the acquirer and the supplier matching data and supplier matching algorithm are associated with the supplier. In some arrangements, each step of the method may be performed at the supplier (such that the obtaining supplier matching data and supplier matching algorithm may be obtaining from memory at the supplier). Alternatively, in some arrangements, some steps of the method may be performed at the supplier and other steps may be performed at the acquirer.

The acquirer matching data is data stored by the acquirer that the acquirer wishes to match to the supplier matching data, so that it can be determined which of the supplier matching data and any additonal supplier data correspond to the acquirer matching data.

The method may further comprise: obtaining further supplier matching data and a further supplier matching algorithm from a further data supplier; performing a third matching process using the acquirer matching algorithm, wherein the third matching process comprises comparing the acquirer matching data to the further supplier matching data, such that a third subset of the acquirer matching data and a first subset of the further supplier matching data that comprise corresponding data points to each other are determined using the acquirer matching algorithm; performing a fourth matching process using the further supplier matching algorithm, wherein the fourth matching process comprises comparing the acquirer matching data to the further supplier matching data, such that a fourth subset of the acquirer matching data and a second subset of the further supplier matching data that comprise corresponding data points to each other are determined; and determining a difference between one of the subsets determined by the third matching process and one of the subsets determined by the fourth matching process; and wherein updating the acquirer matching algorithm based on the difference further comprises: updating the acquirer matching algorithm based on the difference between one of the subsets determined by the third matching process and one of the subsets determined by the fourth matching process, thereby to converge the acquirer matching algorithm towards the further supplier matching algorithm.

The further supplier matching data and the further supplier matching algorithm are both obtained from a further data supplier. Therefore, by sending the matching algorithm to a plurality of data suppliers such that each of the data suppliers then performs two matching processes, one with the acquirer matching algorithm and one with their own matching algorithm, the acquirer matching algorithm may then be updated based on all the different matching algorithms of the suppliers. If one matching algorithm at a data supplier or at multiple data suppliers were to then fail, the updated matching algorithm at the acquirer can be used in place of all the supplier matching algorithms. This is because the matching algorithm of the acquirer has been converged towards each of the matching algorithms of the suppliers. This method also reduces any knock-on effect of a single data matching algorithm failing at one supplier, as there is no longer necessarily any need to send matching data to a first supplier, then a second supplier and so on. The updated matching algorithm can be used in place of all suppliers, so the acquirer no longer is dependent on each of the suppliers individually.

Furthermore, a single acquirer matching algorithm developed for uses with a plurality of different suppliers, instead of using a matching algorithm developed for each different supplier, may be more efficient, significantly reduces the computer resources required for data matching and reduces the effects of a single matching algorithm failure affecting all the other data matching algorithms, as described above.

In some arrangements, the updating the acquirer matching algorithm step comprises simultaneously updating the acquirer matching algorithm based on the difference between one of the subsets determined by the first matching process and one of the subsets determined by the second matching process and the difference between one of the subsets determined by the third matching process and one of the subsets determined by the fourth matching process . Alternatively, the updating the acquirer matching algorithm step comprises updating the acquirer matching algorithm based on the difference between one of the subsets determined by the third matching process and one of the subsets determined by the fourth matching process after updating the acquirer matching algorithm based on the difference between one of the subsets determined by the first matching process and one of the subsets determined by the second matching process.

The method may further comprise: determining an average difference between the difference determined between one of the subsets determined by the first matching process and one of the subsets determined by the second matching process, and the difference determined between one of the subsets determined by the third matching process and one of the subsets determined by the fourth matching process, and wherein updating the acquirer matching algorithm based on the difference step further comprises: updating the acquirer matching algorithm based on the average difference thereby to converge the acquirer matching algorithm towards the supplier matching algorithm and the further supplier matching algorithm.

This allows the acquirer matching algorithm, when sending the matching algorithm to multiple suppliers, to be updated based on an average between all of the suppliers' matching algorithms. As different supplier matching algorithms may vary between suppliers, in this way the acquirer may obtain an updated matching algorithm that is based off of all of the supplier matching algorithms, and so if any number of the supplier algorithms were to fail, the acquirer may make use of a single algorithm to work effectively for all of the suppliers of interest. This is because the acquirer matching algorithm is based off of an average of all the supplier's matching algorithms. In some arrangements, the average between the supplier's matching algorithms (i.e., the average difference or the updated average difference) may be a weighted average.

The method may also further comprise: obtaining a total supplier data set from the data supplier, wherein the total supplier data set comprises the supplier matching data and additional supplier data, wherein each data point within the additional supplier data corresponds to a data point in the supplier matching data; performing a matching process using the updated acquirer matching algorithm, wherein the matching process comprises comparing the acquirer matching data to the supplier matching data, such that a subset of the acquirer matching data and a subset of the supplier matching data that comprise corresponding data points to each other are determined; determining a subset of the additional supplier data that corresponds to the subset of the supplier matching data, wherein the subset of the additional supplier data also comprises corresponding data points to the subset of acquirer matching data; combining each data point of the subset of acquirer matching data with the corresponding data points of the subset of additonal supplier data to obtain a total set of acquirer data; and using the total set of acquirer data to train and validate a machine learning model.

Advantageously, the acquirer can therefore determine only additional supplier data that corresponds to the acquirer matching data. The data acquirer can now acquire a total supplier data set comprising many different data points, and with the updated matching algorithm can match the data themselves in order to determine the data points of interest from within this total data set, and without requiring the matching algorithms of the data supplier(s). The data acquirer may do this by matching their own matching data to the matching data of the supplier or any new matching data the supplier may have (that is within the total supplier data set), such that additional data corresponding to their acquirer matching data can be found within the total supplier data set.

Therefore, if the data acquirer were to continuously require data from a data supplier for training, testing and implementing a prediction algorithm or machine learning model, and if a failure were to occur at the data supplier, the data acquirer is no longer reliant on the supplier's matching algorithm. The data acquirer can acquire all the data from the supplier (relevant data and irrelevant data) and match it to their matching data themselves (by using the updated acquirer matching algorithm) to determine the relevant data.

The supplier matching data may be the same as the initial supplier matching data that was used to match to the acquirer matching data in order to train and update the acquirer matching algorithm. Alternatively, the new set of supplier matching data may comprise all of the initial supplier matching data and some new data, it may comprise some of the initial supplier matching data and no new data, or it may comprise some of the initial supplier matching data and some new data. The specific data points within the acquirer matching data may also have changed since its use in training and updating the acquirer matching algorithm. However, for the acquirer matching algorithm to be able to match any changed data points within the acquirer matching data to the new supplier matching data, the changed data points within the acquirer matching data will also have had to change in the supplier matching data, i.e., any new data points within the acquirer matching data will also have to be in the new supplier matching data if the acquirer matching algorithm were to be able to match them.

If all of the acquirer matching data is matched successfully to data within the new supplier matching data set, then the subset of acquirer matching data will be the same as the total acquirer matching data. It is noted that in some arrangements, the subset of acquirer matching data that was matched to the supplier matching data using the updated matching algorithm still may not contain all the data within the original acquirer matching data. However this now may be due only to the supplier matching data not containing all of the data points in the acquirer matching data in the first instance i.e., the supplier does not store all of the data points stored by the acquirer (rather than a failure).

Preferably, the method may further comprise: obtaining a total further supplier data set from the further supplier, wherein the total further supplier data set comprises the further supplier matching data and additional further supplier data, wherein each data point within the additional further supplier data corresponds to a data point in the further supplier matching data; performing a further matching process using the updated acquirer matching algorithm, wherein the further matching process comprises comparing the acquirer matching data to the further supplier matching data, such that a further subset of the acquirer matching data and a subset of the further supplier matching data that comprise corresponding data points to each other are determined; determining a subset of the additional further supplier data that corresponds to the subset of the supplier matching data, wherein the subset of the additional further supplier data also comprises corresponding data points to the further subset of acquirer matching data; combining each data point of the further subset of acquirer matching data with the corresponding data points of the subset of additonal further supplier data to obtain a further total set of acquirer data; and using the further total set of acquirer data to train and validate a machine learning algorithm.

In this way, the acquirer can acquire data from many different suppliers and match the data from the different suppliers with their own matching algorithm, meaning the acquirer no longer must rely on the suppliers for data matching. If a failure were to occur at one or more supplier matching algorithms, the acquirer will no longer be affected.

Therefore, if the data acquirer were to continuously need data from a group of data suppliers for training, testing and implementing a prediction algorithm, machine learning model etc., and if a failure were to occur at one or more of the data suppliers, the data acquirer is no longer reliant on any of the suppliers' matching algorithms, and can acquire all the data and match it to their data themselves (by using the updated acquirer matching algorithm that covers a plurality of suppliers).

If all of the acquirer matching data is matched successfully to data within the new further supplier matching data set, then the further subset of acquirer matching data will be the same as the total acquirer matching data.

Preferably, if the difference between one of the subsets determined by the first matching process and one of the subsets determined by the second matching process is above a predetermined threshold, the method may further comprise: i) performing an additional matching process using the updated acquirer matching algorithm, wherein the additional matching process comprises comparing the acquirer matching data to the supplier matching data, such that an updated first subset of the acquirer matching data and an updated first subset of the supplier matching data that comprise corresponding data points are determined; ii) determining a difference between one of the subsets determined by the additional matching process and one of the subsets determined by the second matching process; and iii) updating the updated matching algorithm based on the difference between one of the subsets determined by the additional matching process and one of the subsets determined by the second matching process, thereby to converge the updated acquirer matching algorithm towards the supplier matching algorithm; and repeating steps i) to iii) until the difference between one of the subsets determined by the additional matching process and one of the subsets determined by the second matching process is below the predetermined threshold.

In this way, the first matching processes, in terms of matching acquirer matching data to supplier matching data, is performed again, however by using the updated acquirer matching algorithm instead of the acquirer matching algorithm. This matching process is performed until the difference calculated between one of the subsets determined by the additional matching process and one of the subsets determined by the second matching process after each repetition of the matching process is below a pre-determined threshold. For example the pre-determined threshold may be a 1% difference, a 5% difference or a 10% difference or any other threshold value.

Advantageously, the acquirer matching algorithm may be continuously updated and retrained after each matching process which ensures that the final updated matching algorithm developed has sufficiently converged towards the matching algorithm of the data supplier, or all the matching algorithms of the data suppliers. If a data supplier(s) or data supplier matching algorithm(s) were to fail, and the matching algorithm developed by the acquirer does not correspond sufficiently to the supplier(s) matching algorithm(s), then the data matching performed by the acquirer may not be accurate and may not yield sufficient matching results. Therefore, updating the matching algorithm until any difference calculated is below a predetermined threshold ensures the final developed matching algorithm corresponds sufficiently to that of a data supplier or plurality of suppliers, and ensures accuracy and a high performance of that updated acquirer matching algorithm.

In some arrangements, the updated acquirer matching algorithm used to perform the matching process to determine the subset of additional supplier data corresponding to the subset of acquirer matching data may be the acquirer matching algorithm updated based on the difference between one of the subsets determined by the first matching process and one of the subsets determined by the second matching process, or the updated acquirer matching algorithm used may be the acquirer matching algorithm that has been updated based on the difference (between one of the subsets determined by the additional matching process and one of the subsets determined by the second matching process) that was determined to be below the predetermined threshold as described in steps i) to iii).

Alternatively, if the difference between one of the subsets determined by the third matching process and one of the subsets determined by the fourth matching process is above a predetermined threshold, the method further comprises: i) performing a second additional matching process using the updated acquirer matching algorithm, wherein the second additional matching process comprises comparing the acquirer matching data to the further supplier matching data, such that an updated third subset of the acquirer matching data and an updated first subset of the further supplier matching data that comprise corresponding data points to each other can be determined; and ii) determining a difference between one of the subsets determined by the second additional matching process and one of the subsets determined by the fourth matching process and wherein the updating the updated acquirer matching algorithm step further comprises: updating the updated acquirer algorithm based on the difference between one of the subsets determined by the second additional matching process and one of the subsets determined by the fourth matching process, thereby to converge the updated acquirer matching algorithm towards the supplier algorithm and the further supplier algorithm; and repeating steps i) to iii) until the difference between one of the subsets determined by the second additional matching process and one of the subsets determined by the fourth matching process is below the predetermined threshold.

The updated acquirer matching algorithm used to perform the further matching process to determine the subset of additonal further supplier data corresponding to the further subset of acquirer matching data, in some arrangements, be the acquirer matching algorithm updated based on the difference between one of the subsets determined by the third matching process and one of the subsets determined by the fourth matching process, or the updated acquirer matching algorithm used may be the acquirer matching algorithm that has been updated based on the difference (between one of the subsets determined by the second additional matching process and one of the subsets determined by the fourth matching process) that was determined to be below the predetermined threshold as described in steps i) to iii).

In some arrangements, if the difference between one of the subsets determined by the first matching process and one of the subsets determined by the second matching process, and the difference between one of the subsets determined by the third matching process and one of the subsets determined by the fourth matching process are both above a predetermined threshold, both of these differences may be re-determined (and the updated acquirer matching algorithm updated) as described in steps i) to iii) until both the difference between one of the subsets determined by the first matching process and one of the subsets determined by the second matching process, and the difference between one of the subsets determined by the third matching process and one of the subsets determined by the fourth matching process are below the predetermined threshold.

In this way, the additional matching processes, in terms of matching acquirer matching data to further supplier matching data, is performed again, however by using the updated acquirer matching algorithm instead of the acquirer matching algorithm. This matching process may be performed at the further supplier until the difference calculated between one of the subsets determined by the second additional matching process and one of the subsets determined by the fourth matching process after each additional matching process is below a pre-determined threshold.

Preferably, the determining of the difference between one of the subsets determined by the first matching process and one of the subsets determined by the second matching process may further comprise: determining a proportion of the acquirer matching data that, after the first matching process, was determined to be the first subset of acquirer matching data; and determining a second proportion of the acquirer matching data that, after the second matching process, was determined to be the second subset of acquirer matching data, wherein the difference is determined between the first proportion of the acquirer matching data and the second proportion of the acquirer matching data.

In this way, the difference is calculated as the difference between the proportion of acquirer matching data that was determined to be the first subset, and the proportion of the acquirer matching data that was determined to be the second subset. This can be viewed as the difference between the proportion of acquirer matching data that was successfully matched to supplier matching data using the acquirer matching algorithm, and the proportion of acquirer matching data that was successfully matched to supplier matching data using the supplier matching algorithm. Therefore, using these proportions (and calculated difference between them) the acquirer matching algorithm can be updated to converge towards the results of the supplier matching algorithm. The proportions determined may, for example, be a percentage or a fraction.

Alternatively, determining the difference between one of the subsets determined by the third matching process and one of the subsets determined by the fourth matching process further comprises: determining a third proportion of the acquirer matching data that, after the third matching process, was determined to be the third subset of acquirer matching data; and determining a fourth proportion of the acquirer matching data that, after the fourth matching process, was determined to be the fourth subset of acquirer matching data, wherein the further difference is then determined between the third proportion of the acquirer matching data and the fourth proportion of the acquirer matching data by comparing the third proportion of the acquirer matching data to the fourth proportion of the acquirer matching data.

In some arrangements, determining the updated difference between the updated first subset of acquirer matching data and the updated first subset of acquirer matching data further comprises: determining a first updated proportion of the acquirer matching data that, after the additional matching process, was determined to be the updated first subset of acquirer matching data; and determining a second proportion of the acquirer matching data that, after the second matching process, was determined to be the second subset of acquirer matching data, wherein the updated difference is then determined between the first updated proportion of the acquirer matching data and the second proportion of the acquirer matching data.

In some arrangements, determining the updated further difference between the updated third subset of acquirer matching data and the updated fourth subset of acquirer matching data further comprises: determining a third updated proportion of the acquirer matching data that, after the second additional matching process, was determined to be the updated third subset of acquirer matching data; and determining a fourth proportion of the acquirer matching data that, after the fourth matching process, was determined to be the fourth subset of acquirer matching data, wherein the updated further difference is then determined between the third updated proportion of the acquirer matching data and the fourth proportion of the acquirer matching data.

Preferably, the supplier matching data and acquirer matching data comprises a plurality of data points, and wherein each of the plurality of data points comprise a plurality of data features.

In some arrangements, the further supplier matching data, the new supplier matching data and the supplier additional data all comprise a plurality of data points and wherein each of the plurality of data points comprise a plurality of data features.

Preferably, each of the data points may relate to a different merchant, and wherein each of the data features within each of the data points relate to different information on the merchant in which the data point relates to.

The acquirer matching data and any data acquired from a supplier or suppliers, including matching data, may contain data points that relate to a plurality of different merchants. Each data point may comprise of different features that relate to different merchant information, and each of the data sets may have a different number of data points with different numbers of features, or they may have the same number of data points and the same or some of the same number of data features. In some arrangements, the matching data (acquirer, supplier and further supplier) may contain any number of data points, however each data point may contain some, or all, of the same data features. Whereas the additional supplier data or additional further supplier data may contain the same or similar number of data points as all of the matching data but each data point may comprise different data features as the features present in the data points of all the matching data (acquirer, supplier and further supplier). Furthermore, corresponding data points refers to data points that are present in one or more sets or subsets of data. Therefore, corresponding data points are, for example, data points relating to the same merchant and may comprise the same features or they may comprise different features.

As an example, the data features may be any number of merchant name, merchant ID, merchant location, merchant category, number of customers and any other information that may be relevant to the acquirer regarding the merchant.

Preferably, the updated acquirer matching algorithm may be configured for uses in training and validating a fraud detection algorithm.

The updated acquirer matching algorithm can be used for matching acquirer data with data obtained from one or more suppliers for uses in development of a fraud detection algorithm. Therefore, the present invention enables data matching in the event of a failure at a data supplier, which prevents a failure of the fraud detection algorithm, resulting in an increased performance and better predictions of the fraud detection algorithm. This may also be a machine learning fraud detection model.

According to a further aspect of the invention, there is provided a data acquirer for enabling data matching at the data acquirer in the event of a failure at a data supplier, the data acquirer comprising: a memory configured to store acquirer matching data and an acquirer matching algorithm; and a processor configured to: send, to the data supplier, the acquirer matching data and the acquirer matching algorithm; instruct the data supplier to perform a first matching process using the acquirer matching algorithm, and a second matching process using a supplier matching algorithm stored at the data supplier, wherein the first and second matching processes comprise comparing the acquirer matching data to supplier matching data stored at the data supplier, such that a first subset of the acquirer matching data and a first subset of the supplier matching data that comprise corresponding data points are determined by the acquirer matching algorithm, and a second subset of acquirer matching data and a second subset of supplier matching data that comprise corresponding data points are determined by the supplier matching algorithm, such that a difference between one of the subsets determined by the first matching process and one of the subsets determined by the second matching process is determined; receive, from the data supplier, the difference between one of the subsets determined by the first matching process and one of the subsets determined by the second matching process; update the acquirer matching algorithm based on the difference thereby to converge the acquirer matching algorithm towards the supplier matching algorithm.

According to a further aspect of the invention, there is provided a data supplier for enabling data matching at a data acquirer in the event of a failure at the data supplier, the data supplier comprising: a memory configured to store supplier matching data and a supplier matching algorithm; and a processor configured to: receive, from a data acquirer, acquirer matching data and an acquirer matching algorithm; perform a first matching process using the acquirer matching algorithm, wherein the first matching process comprises comparing the acquirer matching data to the supplier matching data, such that a first subset of the acquirer matching data and a first subset of the supplier matching data that comprise corresponding data points are determined; perform a second matching process using the supplier matching algorithm, wherein the second matching process comprises comparing the acquirer matching data to the supplier matching data, such that a second subset of the acquirer matching data and a second subset of the supplier matching data that comprise corresponding data points are determined; determine a difference between one of the subsets determined by the first matching process and one of the subsets determined by the second matching process; and send, to the data acquirer, the difference such that the acquirer matching algorithm can be updated based on the difference thereby to converge the acquirer matching algorithm towards the supplier matching algorithm.

The data acquirer, and/or data supplier may be configured to perform the computer implemented method of the above aspect.

According to a further aspect of the invention, there is provided a system for enabling data matching at a data acquirer in the event of a failure at a data supplier, the system comprising the data acquirer and the data supplier, and is configured to perform any of the above-mentioned method steps according to the above aspects of the invention.

### Description of Figures

Figure 1 shows a schematic block diagram of a conventionally known system in which a data acquirer acquires matched data from a data supplier;
Figure 2 shows a schematic block diagram of a conventionally known system in which a data acquirer acquires matched data from a plurality of data suppliers;
Figure 3 shows a schematic block diagram of a system for enabling data matching at data acquirers, according to certain aspects of the invention;
Figure 4 shows a schematic block diagram of a system at a data acquirer for enabling a matching process in order to determine relevant data within a data set obtained from a data supplier, according to an aspect of the present invention;
Figure 5 shows a flow diagram of a computer implemented method for enabling data matching at a data acquirer in the event of a failure at a data supplier, according to an aspect of the present invention; and
Figure 6 shows a data processing device, according to aspects of the present invention.

### Detailed Description

The present invention relates to methods and systems for enabling data matching at a data acquirer in the event of a failure at a data supplier. The methods and systems are directed to data matching algorithms and their applications into real world systems. The present invention allows an acquirer's data matching algorithm to be updated based on the data matching algorithm of a data supplier or a group of data suppliers without the acquirer having direct access to the supplier's algorithm.

This is achieved by comparing the outputs of the acquirer's data matching algorithm and the outputs of the supplier(s) matching algorithm(s) and updating the acquirer data matching algorithm depending on the difference between the outputs of the different supplier matching algorithms. The acquirer may then update their matching algorithm to correspond or converge towards the matching algorithm(s) of the data supplier(s). Once sufficiently converged, the acquirer can then utilise this updated matching algorithm in the event of a failure at any data supplier or failure of a supplier matching algorithm. When this updated data acquirer matching algorithm is then used to match data for machine learning models and artificial intelligence algorithms, the data provided to these other algorithms will no longer rely on a data supplier or data supplier matching algorithm. This ensures a more efficient and low-cost process, as well as a more secure and accurate acquirer data matching algorithm that will not be affected by a failure at a data supplier.

A failure at a data supplier may be a network security threat at the data supplier, or a failure of the data supplier's computer systems caused by malicious software. Such a failure has an effect on the systems and algorithms at the data acquirer, as data can no longer be acquired or matched. The failure may also be that the data supplier has modified or altered their matching algorithm such that it is no longer compatible with the data of the data acquirer. Therefore, the supplier can no longer match their data to the acquirer's data or the accuracy of the matching is significantly reduced, meaning the data acquirer can no longer acquire any data.

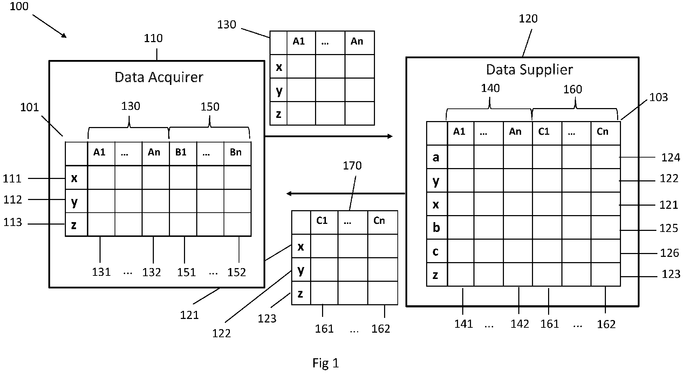

Figure 1 shows a schematic block diagram of system 100 currently used by data acquirers in order to acquire data from data suppliers. The system 100 comprises a data acquirer 110 in communication with a data supplier 120. The system may also comprise additional other data suppliers (not shown) in communication with the data acquirer 110.

The data acquirer 110 stores data 101. The data 101 in which the acquirer 110 stores consists of a plurality of data points x 111, *y* 112 and z 113. The acquirer may store one or more data points and is not limited to the number of data points shown in Figure 1. Each of data points x 111, *y* 112 and z 113 within the data 101 stored at the acquirer 110 include one or more data features *A1* 131 to *An* 132, and one or more data features *B1* 151 to *Bn* 152. The features *A1* 131 to *An* 132 of the data points *x* 111, *y* 112 and z 113 form acquirer matching data 130, which is the data sent to the supplier 120 that is intended to be matched to the supplier matching data 140 (i.e. data that the supplier holds). The features *B1* 151 to *Bn* 152 of data points x 111, *y* 112 and z 113 form any other data 150 the acquirer may have. The features *A1* 131 to *An* 132 contained within acquirer matching data 130 are different to the features *B1* 151 to *Bn* 152 contained within the other acquirer data 150.

The data supplier 120 stores data 103. The data 103 includes a large number of data points, for example data points *x* 121, *y* 122, *z* 123, *a* 124, *b* 125, and *c* 126. The data supplier also stores matching data 140, which is data used by the supplier 120 to match to acquirer matching data 130. This supplier matching data 140 includes the features *A1* 141 to *An* 142 of data points 121, 122, 123, 124, 125, 126. The supplier will also store additional data 160 in which the acquirer wishes to obtain. The additional data 160 includes data features *C1* 161 to *Cn* 162 of data points 121, 122, 123, 124, 125, 126. The features *C1* 161 to *Cn* 162 contained within supplier additonal data 160 are different to the features *A1* 131 to *An* 132 contained within the supplier matching data 140.

The supplier matching data 140 includes the same data points as the acquirer matching data 130 (e.g., data points *x* 111, *y* 112, and *z* 113 of the data acquirer 110 and data points *x* 121, *y* 122, *z* 123 of supplier matching data 140). Furthermore, the data points included in the acquirer matching data 130 and the supplier matching data 140 contain the same, or substantially the same, data features, i.e., *A1* 131 to *An* 132 of acquirer matching data 130 and *A1* 141 to *An* 142 of supplier matching data 140 are the same data features. The supplier matching data 140 also contains one or more additonal data points that are not present in acquirer matching data 130 (e.g., data points *a* 124, *b* 125 and *c* 126 of supplier matching data are not stored by the acquirer 110). It may also be the case that the data stored by the data acquirer 110 are not all stored by the data supplier.

The data stored at the acquirer 110 and the supplier 120, in some arrangements are data relating to merchants, and each of the features within each data point, in some arrangements relate to different types of merchant information. For example, the features could include merchant name, merchant ID, merchant location, merchant category, number of customers and any other information that may be relevant to the acquirer and/or supplier.

Some of the data points 121, 122, 123, 124, 125, 126 stored by the data supplier 120 do not correspond to the data points 111, 112, 113 within the data set 101 stored by the acquirer 110. In order to acquire a subset 170 of the supplier additonal data 160 that corresponds to the data points 111, 112, 113 in the acquirer matching data 130, the data acquirer 110 must send their matching data 130 to the data supplier 120. The subset 170 of the supplier additonal data 160 is relevant data of interest to the acquirer 110 and data that the acquirer wishes obtain.

After receiving the acquirer matching data 130, the data supplier 120 then proceeds to perform a matching process to match the received acquirer matching data 130 to their own supplier matching data 140. This is achieved by the use of a data matching algorithm. The data supplier 120 will use a data matching algorithm to compare the received acquirer matching data 130 to their supplier matching data 140, in order to determine a subset of the supplier matching data 140 and a subset of the acquirer matching data 130 that corresponds to one another.

The data supplier 120 will determine a subset of supplier matching data 140 and a subset of acquirer matching data 130 where each data point within the subset of supplier matching data 140 corresponds to a data point in the subset of acquirer matching data 130. For example, data supplier 120 will match the two sets of matching data 130, 140, in order to identify that data points *x* 121, *y* 122 and *z* 123 in supplier matching data 140 match or correspond to data points *x* 111, *y* 112 and *z* 113 in acquirer matching data 130. It is possible for the data supplier 120 to match the acquirer matching data 130 with the supplier matching data 140 as both of these sets of data contain the same or substantially the same data features *A1* to *An* (features 131 to 132 of acquirer matching data 130 and features 141 to 142 of supplier matching data 140).

As shown in Figure 1, all of the data points in acquirer matching data 130 have been identified in supplier matching data 140, therefore the subset of acquirer matching data 130 (determined to match the subset of supplier matching data 140) will be the same as the total acquirer matching data 130. However, in some instances, the supplier 120 may fail to match all the data points in acquirer matching data 130, and therefore the subset of acquirer matching data 130 (determined to correspond to the subset of supplier matching data 140) will be different to the acquirer matching data 130, it may contain less data points.

The supplier 120 has therefore determined a subset 170 of supplier additional data 160 to send back to the acquirer 110, by identifying the matched data points 121, 122 and 123 within the additional data 160. Each of the matched data points 121, 122 and 123 (and the other unmatched data points) that form the supplier matching data 140 also make up the supplier additional data 160. Therefore, the supplier 120 determines the features *C1* 161 to *Cn* 162 of data points 121, 122 and 123 to form the subset 170 of supplier additional data 160 that corresponds to the subset of acquirer matching data 130. In this way, data acquirer 110 has only acquired a subset 170 of additonal supplier data 160 that corresponds to data within their data set 101.

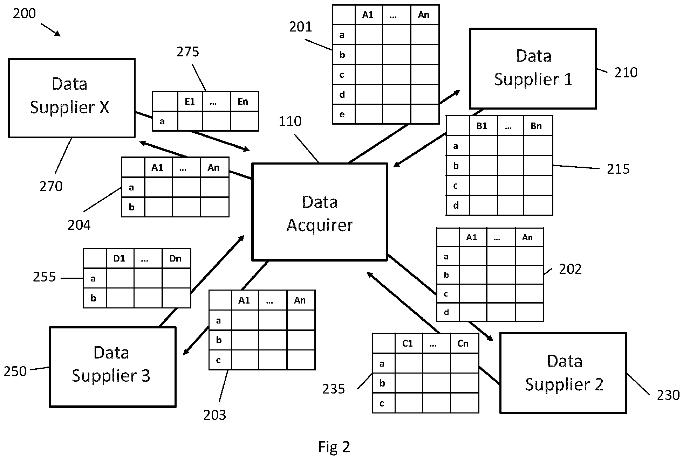

The current process described above and shown in Figure 1, may also be performed by a data acquirer and multiple different data suppliers. Figure 2 shows a schematic block diagram of system 200, in which data acquirer 110 is in communication with data suppliers 210, 230, 250 and 270, represented by data suppliers 1, data supplier 2, data supplier 3 to data supplier X.

As seen in Figure 2, the data acquirer 110 sends acquirer matching data, for example acquirer matching data 201, 202, 203 and 204, to each of the data suppliers 210, 230, 250 and 270, and in return each of the data suppliers 210, 230, 250 and 270 send back to the data acquirer 110 additonal supplier data, for example 215, 235, 255, 275 that corresponds to the acquirer matching data that was sent to them. The process between the data acquirer and each data supplier in determining the additonal supplier data that corresponds to the acquirer matching data is the same as the matching processed described in relation to system 100 of Figure 1.

The data acquirer 110 sends acquirer matching data 201 to data supplier 210. The data supplier 210 proceeds to use their own matching algorithm to match the acquirer matching data 201 to their own supplier matching data (not shown) using the same matching process as described in relation to Figure 1. The data supplier 210 can then determine a set of additonal supplier data 215 to send back to the acquirer 110. However, as can be seen in Figure 2, the additonal data 215 does not contain all of the same data points as the acquirer matching data 201. The supplier 210 may fail to match all of the acquirer matching data 201 to the supplier matching data, meaning the data 215 sent back to the acquirer 110 from the data supplier 210 will contain a reduced amount of data points. This is due to the fact the subset of acquirer matching data 201 (determined to correspond to a subset of supplier matching data by the matching process) includes fewer data points than the original acquirer matching data 201, and so fewer data points within the supplier additional data were identified to match the acquirer matching data 201 and form the subset 215 that is then sent back to the acquirer 110. For example, this may be due to a failure of the supplier matching algorithm, an inaccuracy in the algorithm or a failure at the supplier systems.

The data acquirer 110 may wish to obtain additonal data from the different suppliers 210, 230, 250 and 270 that all contain the same data points as the data points in the initial acquirer matching data 201. This may be such that the acquirer 110 can obtain a full data set without any missing features or missing data from one or more of the data suppliers 210, 230, 250 and 270. Therefore, upon receiving the additonal data 215 from the first data supplier 210, the data acquirer 110 can only send acquirer matching data 202 that corresponds to the data points in the received additional data 215 to the next data supplier, data supplier 230.

The data supplier 230 matches the reduced acquirer matching data 202 in the same way as defined in relation to Figure 1, such that a set of additonal supplier data 235 from the data supplier 230 is sent back to the acquirer 110. The matching algorithm or systems of this second data supplier 230 may fail for reasons similar to the matching algorithm of the initial data supplier 210. Therefore, the data points within the set 235 of additonal supplier 230 data are further reduced compared to the already reduced acquirer matching data 202. The acquirer 110 therefore, does not receive from the data supplier 230, the same number of data points in the additonal supplier data 235 as the number of data points in the acquirer matching data 202 that was sent to that supplier 230.

This inaccuracy in data matching or failure of a supplier matching algorithm, may occur at each of the data suppliers 210, 230, 250 and 270. In the same way as described in relation to data supplier 210 and data supplier 230, any other data suppliers (e.g., data supplier 250 or 270) may experience the same failure. Therefore, in sending the acquirer matching data 203 to data supplier 250, the data acquirer 110 may only receive additonal data 255 comprising less data points than acquirer matching data 203 in return. Similarly, in sending the acquirer matching data 204 to data supplier 270, the data acquirer 110 may only receive additonal data 275 comprising less data points than acquirer matching data 204 in return. This is a problem as the acquirer 110 therefore cannot obtain a full (i.e., maximum possible) set of data from each of the data suppliers 210, 230, 250 and 270, as one or more of the supplier may fail to match all of the data.

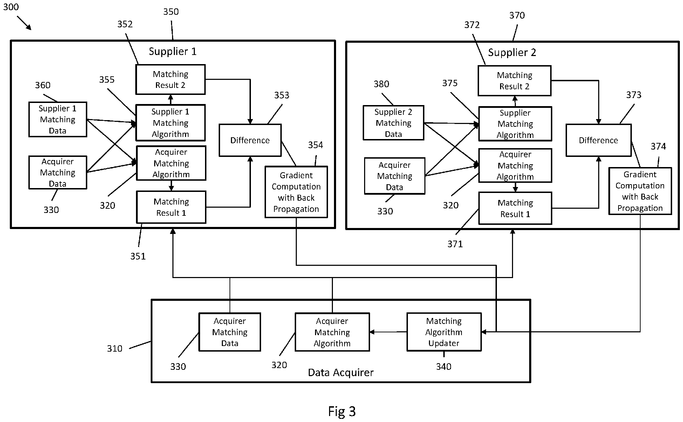

Figure 3 shows a schematic block diagram of system 300 for enabling data matching at a data acquirer in the event of a failure at a data supplier according to certain aspects of the invention. The system 300 comprises of a data acquirer 310 and a first data supplier 350. The system 300 may optionally comprise a second data supplier 370, as shown in Figure 3. The system 300 may also comprise of one or more additonal data suppliers. The data acquirer 310 is in communication with the one or more suppliers 250, 370. The data acquirer 310 stores the same data 101 as the data acquirer 110 referred to above in Figures 1 and 2, or the data acquirer 310 may store different data to data acquirer 110. Similarly, the data suppliers 350 and 370 store the same data as the data suppliers 210, 230, 250, 270 referred to in Figure 2 or data supplier 120 in Figure 1. In other arrangements, the data suppliers 350 and 370 store different data to data suppliers 210, 230, 250 and 270 referred to in Figure 2 and data supplier 120 referred to in Figure 1.

The data acquirer 310 stores acquirer matching data 330, an acquirer matching algorithm 320 and a matching algorithm updater 340. The acquirer matching data 330 will include one or more data points and data features and is the same as acquirer matching data 130 referenced in Figure 1. In some arrangements the acquirer matching data 330 is different to the acquirer matching data 130 referred to in Figure 1.

Each data supplier 350, 370 in communication with the data acquirer 310 stores supplier matching data 360, 380 and a supplier matching algorithm 355, 375. The first data supplier 350 stores supplier matching data 360 and a supplier matching algorithm 355, and the second data supplier 370 stores supplier matching data 380 and a supplier matching algorithm 375. The first supplier matching data 360 may be the same as the second supplier matching data 380. First supplier matching data 360 and second supplier matching data 380 may include some data points that are different, or they may totally comprise different data points. The first acquirer matching algorithm 355 may also be the same or similar to the second supplier matching algorithm 375, or they may be substantially different to one another.

The first supplier matching data 360 and first supplier matching algorithm 355 is the same as the supplier matching data 140 and the supplier matching algorithm referred to in relation to Figure 1. If the first data supplier 350 does not store supplier matching data that is the same as supplier matching data 140 of Figure 1, then the second supplier 370 may store supplier matching data 380 and supplier matching algorithm 375 that will be the same as the supplier matching data 140 and the supplier matching algorithm referred to in relation to Figure 1. The first and second supplier matching data 360, 380, or any other supplier matching data stored at any other data supplier, will include one or more data points and data features, such as supplier matching data 140 in Figure 1.

By way of example, the following aspects of the present invention will be described between the data acquirer 310 and the first data supplier 350, using the acquirer matching data 330, the first supplier matching data 360, acquirer matching algorithm 320 and the first supplier matching algorithm 355. However, each step and process may also optionally be performed in the same manner between data acquirer 310 and the second data supplier 370, using the second supplier matching data 380 in place of the first supplier matching data 360 and the second supplier matching algorithm 375 in place of the first supplier matching algorithm 355. These further steps between the data acquirer 310 and the second data supplier 370 are performed simultaneously alongside the process performed between the data acquirer 310 and the first data supplier 350, or they may be performed at different times.

The data acquirer 310 sends acquirer matching data 330 and the acquirer matching algorithm 320 to the data supplier 350. The data supplier 350 then performs two matching processes. Firstly, the data supplier 350 will use the acquirer matching algorithm 320 in order to match the acquirer matching data 330 with the supplier matching data 360. With reference to the matching process performed by data supplier 120 in Figure 1, the supplier 350 will compare the acquirer matching data 330 to their supplier matching data 360, in order to determine which data points within acquirer matching data 330 and supplier matching data 360 are the same or substantially the same. Therefore, the data supplier 350 determines a subset of acquirer matching data 330 and a subset of supplier matching data 360 that contain corresponding data points.

The data supplier 350 will also perform a second matching process using the supplier matching algorithm 355. Similar to the first matching process, the data supplier 350 will compare the acquirer matching data 330 to the supplier matching data 360 using the supplier matching algorithm 355, in order to determine which data points within acquirer matching data 330 and supplier matching data 360 are the same or substantially the same. Therefore, the data supplier 350 determines a second subset of acquirer matching data 330 and a second subset of supplier matching data 360 that contain corresponding data points.

The first matching result 351 of the first matching process using the acquirer matching algorithm 320 is the first subset of acquirer matching data 330 and the first subset of supplier matching data 360 that were determined to include corresponding data points. The second matching result 352 of the second matching process using the supplier matching algorithm 360 is the second subset of acquirer matching data 330 and the second subset of supplier matching data 360 that were determined to include corresponding data points.

The data supplier 350 will then compare the first and second matching results 351, 352 to determine a difference 353 between the matching results. This comparing step to determine the difference 353 will include comparing the subsets of data determined by the first matching process using the acquirer matching algorithm 320, with the subsets of data determined by the second matching process using the supplier matching algorithm 355. This step includes comparing the first subset of acquirer matching data 330 to the second subset of acquirer matching data 330, or comparing the first subset of supplier matching data 360 to the second subset of supplier matching data 360. Furthermore, as the first subset of acquirer matching data 330 corresponds to the first subset of supplier matching data 360, and the second subset of acquirer matching data 330 corresponds to the second subset of supplier matching 360 data, it may also be possible to compare the first subset of acquirer matching data 330 to the second subset of supplier matching data 360 or compare the first subset of supplier matching data 360 to the second subset of acquirer matching data 330 in order to determine the difference 353.

The difference 353 is therefore determined by comparing either of the two first subsets of data outputted by the first matching process (i.e., the first matching result 351) with either of the two second subsets of data outputted by the second matching process (the second matching result 352).

The difference 353 is indicative of a difference between the acquirer matching algorithm 320 and the supplier matching algorithm 355. As both the acquirer and supplier matching algorithms 320, 355 have been used with the same inputs, namely the acquirer matching data 330 and the supplier matching data 360, if the outputs, the first 351 and second 352 matching results, are different then this is likely to indicate that the matching algorithms 320, 355 are different.

The data supplier 350 then sends the difference 353 to the data acquirer 310. In this way, the data acquirer 310 will update the acquirer matching algorithm 320 by using a matching algorithm updater 340, in the aim of minimizing the difference 353 between the first 351 and second 352 matching result such that the acquirer matching algorithm 320 will converge towards the supplier matching algorithm 355.

The acquirer 310 may converge the acquirer matching algorithm 320 towards the supplier matching algorithm 355 by additionally using a back propagation technique 354. The supplier 350, in addition to determining the difference 353, may also optionally compute the back propagation from the difference 353 between the first 351 and second 352 matching results. In doing this, the back propagation determines a gradient for each weight of each parameter of the acquirer matching algorithm 320. The data supplier 350 then sends these gradient calculations 354 to the data acquirer 320.

The data acquirer may then proceed to use the matching algorithm updater 340 to update the acquirer matching algorithm 320 based on the difference 353 and the gradient computations 354.

The data acquirer 310 therefore has obtained an updated acquirer matching algorithm 320 that has been converged towards the supplier matching algorithm 355. The process in obtaining an updated acquirer matching algorithm ends at this step. However, the acquirer matching algorithm 320 may not be sufficiently converged to the supplier matching algorithm 355.

Therefore, the acquirer 310 may optionally send the updated acquirer matching algorithm back to the data supplier 350 in order to perform the matching processes, the difference calculation (optionally including the back propagation method) and the updating of the acquirer matching algorithm 320 again, by using the updated matching algorithm in the first matching process instead of the matching algorithm 320 (both the acquirer and supplier matching data 330, 360 and the supplier matching algorithm 355 remain the same). The data acquirer 310 and data supplier 350 may perform these steps again and again, for any number of iterations until the acquirer matching algorithm 320 updated using each newly calculated difference (after each iteration of the matching process steps) has sufficiently converged towards the supplier matching algorithm 355.

In some arrangements, the data acquirer 310 sets a predetermined threshold in which the new difference calculated after each matching process must fall below, in order for the updated acquirer matching algorithm (updated based on this new difference which is below the threshold), to be sufficiently converged towards the supplier matching algorithm 355. Once the newly calculated difference is less than the predetermined threshold, the acquirer 310 shall perform a final update of the updated acquirer matching algorithm and will no longer send this final updated acquirer matching algorithm to the data supplier 350 to perform another matching process. At this point, the acquirer matching algorithm 320 has been sufficiently updated such that it now corresponds to the supplier matching algorithm 355, and produces sufficiently similar matching results.

The above process and method between the data acquirer 310 and data supplier 350 described in relation to Figure 3, may also be performed between the data acquirer 310 and a further data supplier, such as second data supplier 370 shown in Figure 3. Each step described between the data acquirer 310 and the first data supplier 350 may also be performed between the data acquirer 310 and the second data supplier 370. The second data supplier 370 stores its own supplier matching algorithm 375 and supplier matching data 380.

In this way, the data acquirer 310 may also update the acquirer matching algorithm 320 based on the difference 373 determined by the matching processes performed at the second data supplier 370. Therefore, the acquirer matching algorithm 320 may be updated to converge towards the first supplier matching algorithm 355 and the second supplier matching algorithm 375. Similar to the method performed between the data supplier 350 and the data acquirer 310, the data acquirer 310 may update the acquirer matching algorithm 320 and optionally send the updated acquirer matching algorithm back to the further data supplier 370 to use in the matching processes to determine a new difference, the second data supplier 360 may then update the updated acquirer matching algorithm again and send this newly updated acquirer matching algorithm to the data supplier 370, and so on until the difference determined after each iteration of the matching processes is below the predetermined threshold. Therefore, the data acquirer 310 may update the acquirer matching algorithm 320 until it has sufficiently converged with both the first supplier matching algorithm 355 and the second supplier matching algorithm 375.

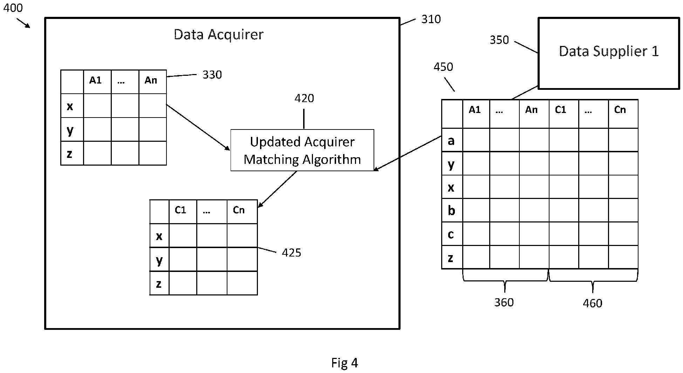

The acquirer matching algorithm 320 has therefore been updated to converge towards the data supplier matching algorithm 355, as well as any further data supplier's algorithms in which the acquirer 310 may wish to acquire data from, for example data supplier matching algorithm 375. In this way, the data acquirer 310 no longer relies upon the system of the data suppliers 350, 370, or the supplier matching algorithms 355, 375. Therefore, if a failure were to occur such as a network security threat, or failure of a supplier's computer systems, the data acquirer 310 will not be affected and will be able to match any data themselves with the updated acquirer matching algorithm. This process is described below and is shown in Figure 4. Furthermore, if any of the data suppliers 350 or 370 were to change or update their matching algorithms 355, 375 such that these algorithms are no longer compatible with the acquirer's matching data 330, or the data suppliers 350, 370 may stop or block the data acquirer 310 from using their supplier matching algorithm 355, 375, the acquirer 310 will now be able to use their own updated matching algorithm without having to rely on the data supplier(s) 350, 370.

Therefore, the acquirer 310 will no longer experience the issues described in relation to obtaining additonal data from a plurality of suppliers (as shown in Figure 2). The updated acquirer matching algorithm 320 has been converged towards the matching algorithms 355, 375 of all the data suppliers 350, 370 such that the acquirer 310 can now match all the data from each supplier 350, 370 themselves, and any failure at one or more of the suppliers 350, 370 will not decrease the amount of data the acquirer 310 can then match to the data of any one of the other data suppliers 350, 370.

Figure 4 shows a schematic diagram of a system 400 comprising a data acquirer performing a matching process in order to determine relevant data from within a data set obtained from a data supplier, after previously performing the methods and processes described in relation to Figure 3. The system 400 comprises of a data acquirer 310 and a data supplier 350 of Figure 3. The system 400 may also additionally comprise of a further data supplier, such as data supplier 370 shown in Figure 3. The system 400 may comprise any data acquirer and data supplier, however the data acquirer and data supplier must have already performed the process and methods described in relation to Figure 3 at an earlier point in time.

The data acquirer 310 obtains a total supplier data set 450 from the data supplier 350. The total supplier data set 450 comprises supplier matching data 360 and additonal supplier data 460. The supplier matching data 360 and additonal supplier data 460 comprise the same or corresponding data points (referenced as *a*, *b*, *c*, *x*, *y* and *z*). However, the features of each data point within the supplier matching data 360 (referenced as *A1* to *An*) are different to the features of additonal supplier data 460 (referenced as *C1* to *Cn*). The supplier matching data 360 is the same as the supplier matching data 360 referenced in Figure 3, or it may include some different data points.

The data acquirer 310 stores acquirer matching data 330 and updated matching algorithm 420. The acquirer matching algorithm 320 referenced in Figure 3 was updated to converge towards the data supplier 350 matching algorithm 355to obtain the updated matching algorithm 420. The acquirer matching data 330 stored at the data acquirer 310 contains one or more data points and data features. The features of acquirer matching data 330 are the same or sufficiently the same as the features in supplier matching data 360 and are different to the features of supplier additonal data 460.

The data acquirer 310 then, after acquiring the total supplier data set 450, performs a matching process using the updated matching fucntion 420 in order to compare the acquirer matching data 330 with the supplier matching data 360 from within the total supplier data set 450.

The updated acquirer matching algorithm 420 is used to match the two sets of matching data 330, 360, and determine a subset of acquirer matching data 330 that contains corresponding data points to a subset of supplier matching data 360. The acquirer 310 then identifies which of the additonal supplier data 460 includes those same corresponding data points to produce a subset 425 of the additonal supplier data 460. The subset 425 of additonal supplier data 460 therefore contains the same data points as the acquirer matching data 330, but different features to the features of acquirer matching data 330. In this way, data acquirer 310 has obtained additonal supplier data 425 that corresponds to acquirer matching data 330. The data acquirer 310 will therefore combine the subset 425 of supplier additonal data 460 with the acquirer matching data 330 to obtain a more complete data set.

The same process of determining a subset 425 of supplier additonal data 460 as described above in relation to Figure 4 may also optionally be performed between data acquirer 310 and another data supplier in which the acquirer matching algorithm had previously been converged towards, such as data supplier 370 referenced in Figure 3. By performing the same process again, but with another, different data supplier with different additonal supplier data, the data acquirer 310 can obtain another subset of additonal supplier data that includes the same data points but different features to combine with the acquirer matching data 330.

The updated acquirer matching algorithm 420 that has been converged towards a supplier matching algorithm or a plurality of supplier matching algorithms has many different applications. One such use may be for providing matched data for a machine learning algorithm that, for example, may be based on a network to determine the presence of a network security threat or to determine fraudulent activity on the network. To produce accurate fraud predictions, the machine learning model will require large amounts of data for training and validating purposes, and after training will continually require data to produce the predictions. Therefore, the acquirer updated matching algorithm 420 may be continually used to match data for this fraud prediction algorithm, such that the prediction algorithm does not rely on any data suppliers or matching algorithms of the data suppliers in an event of a failure at the data supplier. Other uses of the prediction algorithm utilizing the updated acquirer data matching algorithm 420 may include credit risk scoring, merchant utilization estimation, customer churn prediction, or other predictions that may be carried out on transaction data.

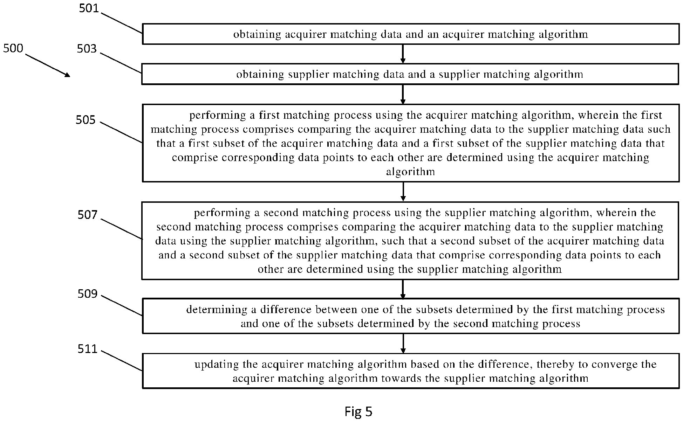

Figure 5 shows a flow diagram of a computer implemented method 500 for enabling data matching at a data acquirer in the event of a failure at a data supplier, according to an aspect of the present invention.

At step 501 the method involves, obtaining acquirer matching data and an acquirer matching algorithm.

At step 503 the method involves, obtaining supplier matching data and a supplier matching algorithm.

At step 505 the method involves, performing a first matching process using the acquirer matching algorithm, wherein the first matching process comprises comparing the acquirer matching data to the supplier matching data such that a first subset of the acquirer matching data and a first subset of the supplier matching data that comprise corresponding data points to each other are determined using the acquirer matching algorithm.

At step 507 the method involves, performing a second matching process using the supplier matching algorithm, wherein the second matching process comprises comparing the acquirer matching data to the supplier matching data using the supplier matching algorithm, such that a second subset of the acquirer matching data and a second subset of the supplier matching data that comprise corresponding data points to each other are determined using the supplier matching algorithm.

At step 509 the method involves, determining a difference between one of the subsets determined by the first matching process and one of the subsets determined by the second matching process.

At step 511 the method involves, updating the acquirer matching algorithm based on the difference, thereby to converge the acquirer matching algorithm towards the supplier matching algorithm.

It will be appreciated that any of the methods described herein, and any step of the methods, can be implemented by a computer. Such implementation may take the form of a processor executing instructions stored on a non-transitory computer-readable medium or media, wherein when executed the instructions cause the processor to perform any one or more steps of any of the methods described herein. Individual steps of any method may be implemented by different processors that are all collectively acting in accordance with computer-readable instructions stored on one or more storage media. The processor(s) may be component(s) of system, for example a processor of a device.

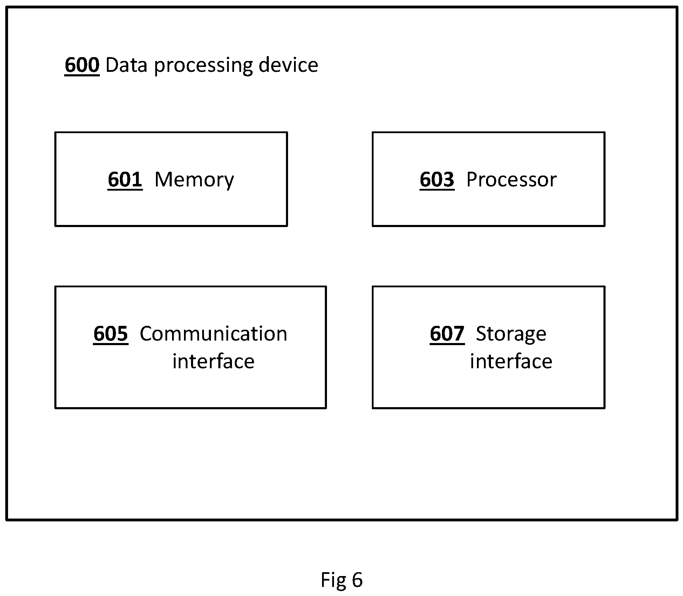

Similarly, any steps of any of the methods described herein may be performed by data processing devices. By way of example, Figure 6 shows, in schematic form, a data processing device 600 that is suitable for performing the functions of the data acquirer, any of the data suppliers, or any of the modules therein. The data processing device 600 may automatically perform any of the methods described herein.

Data processing device 600 includes a processor 603 for executing instructions. Instructions may be stored in a memory 601. Processor 603 may include one or more processing units (e.g., in a multi-core configuration) for executing instructions. The instructions may be executed within a variety of different operating systems on the data processing device 600, such as UNIX, LINUX, Microsoft Windows^{®}, etc. More specifically, the instructions may cause various data manipulations on data stored in memory 601 (e.g., create, read, update, and delete procedures). It should also be appreciated that upon initiation of a computer-implemented method, various instructions may be executed during initialization. Some operations may be required to perform one or more methods described herein, while other operations may be more general and/or specific to a particular programming language (e.g., C, C#, C++, Java, or other suitable programming languages, etc.).

Processor 603 is operatively coupled to a communication interface 605 such that data processing device 600 can communicate with a remote device, such as another data processing device of the system. For example, communication interface 605 may receive communications from another member of the system.

Processor 603 may also be communicatively coupled to a storage device such as a database, depending on the function of data processing device 600 within the context of the system. The storage device is any computer-operated hardware suitable for storing and/or retrieving data, where in the case of a secure storage medium the data is stored and retrieved securely.

The storage database may store the acquirer matching algorithm, the acquirer matching data, the supplier matching algorithm or the supplier matching data, for instance, and it can be external to data processing device 600 and located remotely. Alternatively, it can be integrated in data processing device 600. For example, data processing device 600 may include memory 601 as one or more hard disk drives acting as a storage database. Alternatively, where the storage database is external to data processing device 600, it can comprise multiple storage units such as hard disks or solid-state disks in a redundant array of inexpensive disks (RAID) configuration. The storage database may include a storage area network (SAN) and/or a network attached storage (NAS) system. In some arrangements, the system and methods may be deployed in a cloud-based environment.

Processor 603 can be operatively coupled to the storage device (storage database) via a storage interface 607. Storage interface 607 is any component capable of providing processor 603 with access to the storage device. Storage interface 607 may include, for example, an Advanced Technology Attachment (ATA) adapter, a Serial ATA (SATA) adapter, a Small Computer System Interface (SCSI) adapter, a RAID controller, a SAN adapter, a network adapter, and/or any component providing processor 603 with access to the storage device.

Memory 601 may include, but is not limited to, RAM such as dynamic RAM (DRAM) or static RAM (SRAM), ROM, erasable programmable read-only memory (EPROM), electrically erasable programmable read-only memory (EEPROM), and non-volatile RAM (NVRAM). The above memory types are exemplary only and are not limiting as to the types of memory usable for storage of a computer program.

As used herein, the term "non-transitory computer-readable media/medium" is intended to be representative of any tangible computer-based device implemented in any method or technology for short-term and long-term storage of information, such as, computer-readable instructions, data structures, program modules and sub-modules, or other data in any device. The methods described herein may be encoded as executable instructions embodied in a tangible, non-transitory, computer readable medium, including, without limitation, a storage device, and/or a memory device. Such instructions, when executed by a processor, cause the processor to perform at least a portion of the methods described herein. Furthermore, as used herein, the term "non-transitory computer-readable media/medium" includes all tangible, computer-readable media, including, without limitation, non-transitory computer storage devices, including, without limitation, volatile and non-volatile media, and removable and non-removable media such as a firmware, physical and virtual storage, CD-ROMs, DVDs, and any other digital source such as a network or the Internet, as well as yet to be developed digital means, with the sole exception being a transitory, propagating signal.

As will be appreciated based on the specification herein, the above-described embodiments of the disclosure may be implemented using computer programming or engineering techniques including computer software, firmware, hardware or any combination or subset thereof. Any such resulting program, having computer-readable code means, may be embodied, or provided within one or more computer-readable media, thereby making a computer program product, i.e., an article of manufacture, according to the discussed embodiments of the disclosure. The article of manufacture containing the computer code may be made and/or used by executing the code directly from one medium, by copying the code from one medium to another medium, or by transmitting the code over a network.

While the disclosure has been described in terms of various embodiments, the person skilled in the art will recognise that the disclosure can be practiced with modification within the spirit and scope of the claims.

With reference to Figure 2, the data acquirer 110 may be in communication with any number of data suppliers and is not limited to the data suppliers shown in the figure. The data acquirer shown in Figure 2 may be the same data acquirer 110 as the one shown in Figure 1, or it may be any other data acquirer. Similarly, any of the data suppliers 210, 230, 240 and 270 shown in Figure 2 may be data supplier 120 shown in Figure 1, or they may be a different data supplier.

In other arrangements the matching results obtained from the matching processes conducted by the acquirer matching algorithm and the supplier matching algorithm may optionally further comprise determining a proportion of acquirer matching data that was successfully matched to the supplier matching data. For instance, the first matching result 351 and second matching result 352 between data acquirer 310 and data supplier 350, and the first matching result 371 and second matching result 372 between data acquirer 310 and data supplier 370 may further include a proportion of the matching data 330 that was matched to the respective supplier matching data 360, 380 from each of the matching processes shown in Figure 3. The proportion, for example, may be a percentage of the acquirer matching data 330 that was successfully matched to the supplier matching data 360, 380.

The proportion of acquirer matching data 320 that was matched, for example the first matching result 351, may be calculated by determining the proportion of acquirer matching data 330 that was determined to be the first subset of acquirer matching data 330 after the first matching process using the acquirer matching algorithm 320. This is effectively the proportion of acquirer matching data 330 that corresponds to the supplier matching data 360, 380 i.e., the data that was a successful match. The second matching result 352 may therefore be the proportion of acquirer matching data 330 that was determined to be the second subset of acquirer matching data 330 after the second matching process using the supplier matching algorithm 355.

Optionally, the difference 353 calculated between the first and second matching results 351, 352 may be the difference between these two proportions. Furthermore, if the data acquirer 310 sends the updated matching algorithm back to the data supplier 350 to perform the matching processes again, the difference determined after each matching process may also be the difference between the two proportions of the acquirer matching data 330 that were matched to the data supplier matching data 360, using the acquirer matching algorithm 320 and the supplier matching algorithm 355.

The first and second matching results 371, 372 from the first matching process using the acquirer matching algorithm 320 and the second matching process using the further supplier's matching algorithm 375, may also be a proportion of the acquirer matching data 330 that was determined to be the first subset of acquirer matching data 330 and the second subset of acquirer matching 330 data respectively.

In an alternative arrangement, when a data supplier 310 is in communication with one or more data suppliers 350, 370 and proceeds to perform the method steps shown in Figure 3 with both data suppliers 350, 370, the step of updating the acquirer matching algorithm 320 based on the difference 353 received from the first data supplier 350 and the difference 373 received from the second data supplier 370 further comprises calculating an average between these two differences 353, 373. In this way, the acquirer matching algorithm 320 may be updated based on the average difference between the differences 353, 373 received from each of the data suppliers 350, 370.

## Claims

1. A computer implemented method for enabling data matching at a data acquirer in the event of a failure at a data supplier, the method comprising:
obtaining acquirer matching data and an acquirer matching algorithm;
obtaining supplier matching data and a supplier matching algorithm;
performing a first matching process using the acquirer matching algorithm, wherein the first matching process comprises comparing the acquirer matching data to the supplier matching data such that a first subset of the acquirer matching data and a first subset of the supplier matching data that comprise corresponding data points to each other are determined using the acquirer matching algorithm;
performing a second matching process using the supplier matching algorithm, wherein the second matching process comprises comparing the acquirer matching data to the supplier matching data using the supplier matching algorithm, such that a second subset of the acquirer matching data and a second subset of the supplier matching data that comprise corresponding data points to each other are determined using the supplier matching algorithm;
determining a difference between one of the subsets determined by the first matching process and one of the subsets determined by the second matching process; and
updating the acquirer matching algorithm based on the difference, thereby to converge the acquirer matching algorithm towards the supplier matching algorithm.

2. The computer implemented method of claim 1, wherein determining the difference between one of the subsets determined by the first matching process and one of the subsets determined by the second matching process comprise either:
determining a difference between the first subset of acquirer matching data and the second subset of acquirer matching data; or
determining a difference between the first subset of supplier matching data and the second subset of supplier matching data.

3. The computer implemented method of any preceding claim, wherein the acquirer matching data and acquirer matching algorithm are obtained from the data acquirer and/or the supplier matching data and supplier matching algorithm are obtained from the data supplier.

4. The computer implemented method of any preceding claim, further comprising:
obtaining further supplier matching data and a further supplier matching algorithm from a further data supplier;
performing a third matching process using the acquirer matching algorithm, wherein the third matching process comprises comparing the acquirer matching data to the further supplier matching data, such that a third subset of the acquirer matching data and a first subset of the further supplier matching data that comprise corresponding data points to each other are determined using the acquirer matching algorithm;
performing a fourth matching process using the further supplier matching algorithm, wherein the fourth matching process comprises comparing the acquirer matching data to the further supplier matching data, such that a fourth subset of the acquirer matching data and a second subset of the further supplier matching data that comprise corresponding data points to each other are determined; and
determining a difference between one of the subsets determined by the third matching process and one of the subsets determined by the fourth matching process; and
wherein updating the acquirer matching algorithm based on the difference further comprises:
updating the acquirer matching algorithm based on the difference between one of the subsets determined by the third matching process and one of the subsets determined by the fourth matching process, thereby to converge the acquirer matching algorithm towards the further supplier matching algorithm.

5. The computer implemented method of claim 4 further comprising:
determining an average difference between the difference determined between one of the subsets determined by the first matching process and one of the subsets determined by the second matching process, and the difference determined between one of the subsets determined by the third matching process and one of the subsets determined by the fourth matching process, and
wherein updating the acquirer matching algorithm based on the difference step further comprises:
updating the acquirer matching algorithm based on the average difference thereby to converge the acquirer matching algorithm towards the supplier matching algorithm and the further supplier matching algorithm.

6. The computer implemented method of any preceding claim further comprising:
obtaining a total supplier data set from the data supplier, wherein the total supplier data set comprises the supplier matching data and additional supplier data, wherein each data point within the additional supplier data corresponds to a data point in the supplier matching data;
performing a matching process using the updated acquirer matching algorithm, wherein the matching process comprises comparing the acquirer matching data to the supplier matching data, such that a subset of the acquirer matching data and a subset of the supplier matching data that comprise corresponding data points to each other are determined;
determining a subset of the additional supplier data that corresponds to the subset of the supplier matching data, wherein the subset of the additional supplier data also comprises corresponding data points to the subset of acquirer matching data;
combining each data point of the subset of acquirer matching data with the corresponding data points of the subset of additonal supplier data to obtain a total set of acquirer data; and
using the total set of acquirer data to train and validate a machine learning model.

7. The computer implemented method of claim 4, or claim 5, or claim 6 when dependent on claim 4 or claim 5 further comprising:
obtaining a total further supplier data set from the further supplier, wherein the total further supplier data set comprises the further supplier matching data and additional further supplier data, wherein each data point within the additional further supplier data corresponds to a data point in the further supplier matching data;
performing a further matching process using the updated acquirer matching algorithm, wherein the further matching process comprises comparing the acquirer matching data to the further supplier matching data, such that a further subset of the acquirer matching data and a subset of the further supplier matching data that comprise corresponding data points to each other are determined;
determining a subset of the additional further supplier data that corresponds to the subset of the supplier matching data, wherein the subset of the additional further supplier data also comprises corresponding data points to the further subset of acquirer matching data;
combining each data point of the further subset of acquirer matching data with the corresponding data points of the subset of additonal further supplier data to obtain a further total set of acquirer data; and
using the further total set of acquirer data to train and validate a machine learning algorithm.

8. The computer implemented method of any preceding claim, wherein if the difference between one of the subsets determined by the first matching process and one of the subsets determined by the second matching process is above a predetermined threshold, the method further comprising:
i) performing an additional matching process using the updated acquirer matching algorithm, wherein the additional matching process comprises comparing the acquirer matching data to the supplier matching data, such that an updated first subset of the acquirer matching data and an updated first subset of the supplier matching data that comprise corresponding data points are determined;
ii) determining a difference between one of the subsets determined by the additional matching process and one of the subsets determined by the second matching process; and
iii) updating the updated matching algorithm based on the difference between one of the subsets determined by the additional matching process and one of the subsets determined by the second matching process, thereby to converge the updated acquirer matching algorithm towards the supplier matching algorithm; and
repeating steps i) to iii) until the difference between one of the subsets determined by the additional matching process and one of the subsets determined by the second matching process is below the predetermined threshold.

9. The computer implemented method of any preceding claim, wherein determining the difference between one of the subsets determined by the first matching process and one of the subsets determined by the second matching process further comprises:
determining a proportion of the acquirer matching data that, after the first matching process, was determined to be the first subset of acquirer matching data; and
determining a second proportion of the acquirer matching data that, after the second matching process, was determined to be the second subset of acquirer matching data,
wherein the difference is determined between the first proportion of the acquirer matching data and the second proportion of the acquirer matching data.

10. The computer implemented method of any preceding claim, wherein the supplier matching data and acquirer matching data comprise a plurality of data points, and wherein each of the plurality of data points comprise a plurality of data features.

11. The computer implemented method of claim 11, wherein each of the data points relate to a different merchant, and wherein each of the data features within each of the data points relate to different information on the merchant in which the data point relates to.

12. The computer implemented method of any preceding claim, wherein the updated acquirer matching algorithm is configured for uses in training and validating a fraud detection algorithm.

13. A data acquirer for enabling data matching at the data acquirer in the event of a failure at a data supplier, the data acquirer comprising:
a memory configured to store acquirer matching data and an acquirer matching algorithm; and
a processor configured to:
send, to the data supplier, the acquirer matching data and the acquirer matching algorithm;
instruct the data supplier to perform a first matching process using the acquirer matching algorithm, and a second matching process using a supplier matching algorithm stored at the data supplier, wherein the first and second matching processes comprise comparing the acquirer matching data to supplier matching data stored at the data supplier, such that a first subset of the acquirer matching data and a first subset of the supplier matching data that comprise corresponding data points are determined by the acquirer matching algorithm, and a second subset of acquirer matching data and a second subset of supplier matching data that comprise corresponding data points are determined by the supplier matching algorithm, such that a difference between one of the subsets determined by the first matching process and one of the subsets determined by the second matching process is determined;
receive, from the data supplier, the difference between one of the subsets determined by the first matching process and one of the subsets determined by the second matching process;
update the acquirer matching algorithm based on the difference thereby to converge the acquirer matching algorithm towards the supplier matching algorithm.

14. A data supplier for enabling data matching at a data acquirer in the event of a failure at the data supplier, the data supplier comprising:
a memory configured to store supplier matching data and a supplier matching algorithm; and
a processor configured to:
receive, from a data acquirer, acquirer matching data and an acquirer matching algorithm;
perform a first matching process using the acquirer matching algorithm, wherein the first matching process comprises comparing the acquirer matching data to the supplier matching data, such that a first subset of the acquirer matching data and a first subset of the supplier matching data that comprise corresponding data points are determined;
perform a second matching process using the supplier matching algorithm, wherein the second matching process comprises comparing the acquirer matching data to the supplier matching data, such that a second subset of the acquirer matching data and a second subset of the supplier matching data that comprise corresponding data points are determined;
determine a difference between one of the subsets determined by the first matching process and one of the subsets determined by the second matching process; and
send, to the data acquirer, the difference such that the acquirer matching algorithm can be updated based on the difference thereby to converge the acquirer matching algorithm towards the supplier matching algorithm.

15. A system for enabling data matching at a data acquirer in the event of a failure at a data supplier, the system comprising the data acquirer of claim 13 and the data supplier of claim 14, and configured to perform the method steps of any of claims 1 to 12.
